# EUROPEAN PATENT APPLICATION

(11) **EP 1 594 289 A2**
(43) Date of publication of application: **09.11.2005**
(21) Application number: 05005070.7
(22) Date of filing: 08.03.2005
(51) Int. Cl.: H04M 1/02

(54) **Double sliding-type portable communication apparatus**

(30) Priority: 03.05.2004 KR 2004031183
(71) Applicant: SAMSUNG ELECTRONICS CO., LTD., Suwon-si, Gyeonggi-do (KR)
(72) Inventor: Lee, Yang-Jic, Samsung Electronics Co., Ltd., Suwon-si, Gyeonggi-do (KR); Lee, Jong-Seong, c/o Samsung Electronics Co., Ltd., Suwon-si, Gyeonggi-do (KR)
(74) Representative: Grünecker, Kinkeldey, Stockmair & Schwanhäusser Anwaltssozietät

(57) **Abstract**

Disclosed is a double sliding-type portable communication apparatus, in which one housing is slidably displaced relative to the other housing through double-sliding motions, including a main housing having a first key array including a plurality of keys, a sliding housing moving in a first sliding direction parallel to the orientation of the double sliding-type portable communication apparatus, and also moving in a second sliding direction, which is perpendicular to the first sliding direction, and having a display unit and a second key array including a plurality of keys, and a double sliding member provided between the main housing and the sliding housing facilitating movement of the sliding housing in the first and second sliding directions, the double sliding member also having a third key array including a plurality of keys aligned on an upper surface of the double sliding member.

## Description

The present invention relates to double sliding-type portable communication apparatuses, such as cellular phones, PDAs (personal digital assistants), HHPs (hand held phones), and other communication apparatuses, and more particularly to a double sliding-type portable communication apparatus, in which one housing slidably moves relative to the other housing through double-sliding motions.

In general, a "portable communication apparatus" refers to an electronic appliance allowing users to communicate with other users via wired or wireless communication devices while carrying portable terminals. For the sake of portability, designs of such portable communication apparatuses tend to be compact, slim, and light. Multimedia availability is also a consideration, where having a wider variety of functions is desirable. In particular, future portable communication apparatuses are expected to incorporate greater multi-functionality and multi-purpose utilization, as well as being more compact and lighter, while being capable of accessing various multimedia environments or Internet environments. Additionally, such portable communication apparatuses are now commonly used throughout the world, and are recognized by some people as a nearly indispensable commodity which must always be carried.

Conventional portable communication apparatuses may be classified into various types according to their appearance. For example, sliding type portable communication apparatuses are classified into bar-type communication apparatuses, flip-type portable communication apparatuses and folder-type portable communication apparatuses. The bar-type portable communication apparatus has a single housing shaped like a bar. The flip-type portable communication apparatus has a flip which is pivotably mounted to a bar-shaped housing by a hinge unit. The folder-type portable communication apparatus has a folder coupled to a single bar-shaped housing by a hinge unit to allow rotation of the folder towards the housing to close it, or away from the housing to unfold it.

Further, portable communication apparatuses may be classified into rotation-type communication apparatuses and sliding-type communication apparatuses depending on the particular way the communication apparatus is opened. In the rotation-type portable communication apparatus, two housings are coupled to each other to allow one housing to rotate open or closed relative to the other while facing each other. In the sliding-type portable communication apparatus, two housings are coupled to each other to allow one housing to slideopen or closed relative to the other. These variously classified portable communication apparatuses can be easily understood by those skilled in the art.

Meanwhile, conventional portable communication apparatuses currently transmit data at high speeds in their function of pertorming voice communication.

Currently, portable communication apparatuses are equipped with camera lenses which enable each of the communication apparatuses to transmit an image signal. That is, current conventional portable communication apparatuses may have an embedded or external camera lens or a photographing unit which enable a user to make an image communication with a desired partner or to take a photograph of a desired subject.

However, since the conventional sliding-type portable communication apparatus includes two housings, in which one housing slides in one direction relative to the other housing, the overall thickness of the sliding-type portable communication apparatus consequently increases two-fold with increasing thickness of two housings.

In addition, in the conventional sliding-type portable communication apparatus, one housing slides in an opposite direction relative to the other only exposing a fraction of the inner surface to the user, consequently resulting in less usable surface area where keys and a liquid crystal display may be installed.

This is particularly inconvenient when playing a game or manipulating keys.

Korean Patent Application No. 2002-71911, which has been filed with the Korean Intellectual Property Office by the applicant of the present application, discloses a structure of a sliding-type portable communication apparatus in detail. However, the above sliding-type portable communication apparatus is somewhat bulky due to the result of combining the two housings together. Accordingly, desirability of the sliding-type portable communication apparatus of the prior art is limited.

Accordingly, the present invention has been made to solve the above-mentioned problems occurring in the prior art.

It is the object of the present invention to provide a double sliding-type portable communication apparatus, in which one housing slidably moves relative to the other housing through double-sliding motions to allow the thickness of a portable communication terminal to be minimized, thereby resulting in a slim portable communication terminal.

This object is solved by the subject matter of the independent claims.

Preferred embodiments are defined in the dependent claims.

An aspect of the present invention is to provide a double sliding-type portable communication apparatus, in which one housing slidably moves relative to the other housing through double-sliding motions allowing greater usable area of the inner surface of the housing, thereby allowing greater surface area with which more keys and a larger display unit may be mounted on.

Another aspect of the present invention is to provide a double sliding-type portable communication apparatus, allowing users to conveniently manipulate a plurality of keys with both hands to manipulate the keys or play a game.

In order to accomplish the above, there is provided a double sliding-type portable communication apparatus including a main housing having a first key array including a plurality of keys aligned on an upper surface of the main housing; a sliding housing moving in a first sliding direction parallel to the main housing, and a second sliding direction, which is perpendicular to the first sliding direction, whose upper surface faces away from the main housing and has a display unit and a second key array including a plurality of keys aligned on an upper surface of the sliding housing such that the display unit and the second key array are exposed; and a double sliding member provided between the main housing and the sliding housing to allow the sliding housing to be displaced in the first and second sliding directions and also having a third key array including a plurality of keys aligned on an upper surface of the double sliding member.

According to the preferred embodiment of the present invention, the third key array is exposed to the user while in alignment with the second key array when the sliding housing moves from the main housing in the first sliding direction, the first key array is exposed to the user while being aligned in parallel to the second key array when the sliding housing moves from the main housing in the second direction, and the first to third key arrays are exposed to the user in substantially parallel planes when the sliding housing moves away from the main housing in the first and second sliding directions.

The above object and other aspects, features and advantages of the present invention will be more apparent from the following detailed description taken in conjunction with the accompanying drawings, in which:
FIG. 1 is a perspective view of a double sliding-type portable communication apparatus according to a first embodiment of the present invention;
FIG 2 is an exploded perspective view of a sliding housing and a double sliding member for a double sliding-type portable communication apparatus according to the first embodiment of the present invention;
FIG. 3 is an exploded perspective view showing rear portions of a sliding housing and a double sliding member for a double sliding-type portable communication apparatus according to the first embodiment of the present invention;
FIG. 4 is a perspective view showing a sliding housing-double sliding member assembly for a double sliding-type portable communication apparatus according to the first embodiment of the present invention;
FIG. 5 is a perspective view showing a double sliding-type portable communication apparatus according to the first embodiment of the present invention, in which a sliding housing has been moved into a first sliding position;
FIG. 6 is a perspective view showing a sliding housing-double sliding member assembly for a double sliding-type portable communication apparatus according to the first embodiment of the present invention, in which a sliding housing has been moved into a first sliding position;
FIG. 7 is a perspective view showing a double sliding-type portable communication apparatus according to the first embodiment of the present invention, in which a sliding housing has been moved into a second sliding position;
FIG. 8 is a bottom view of a double sliding-type portable communication apparatus shown in FIG. 7;
FIG. 9 is a perspective view showing a rear portion of a sliding housing-double sliding member assembly for a double sliding-type portable communication apparatus according to the first embodiment of the present invention, in which the sliding housing has been moved into a second sliding position;
FIG. 10 is a perspective view showing a double sliding-type portable communication apparatus according to the first embodiment of the present invention, in which first and second sliding movements of a sliding housing have been completed; and
FIG. 11 is a perspective view showing a first key array provided in a main housing of a double sliding-type portable communication apparatus according to another embodiment of the present invention.

Hereinafter, preferred embodiments of the present invention will be described with reference to the accompanying drawings. In the following description of the preferred embodiment of the present invention, a detailed description of known functions and configurations incorporated herein will be omitted when it may make the subject matter of the present invention unclear. In the drawings, the same or similar reference numbers will be used throughout the drawings to refer to the same or like parts.

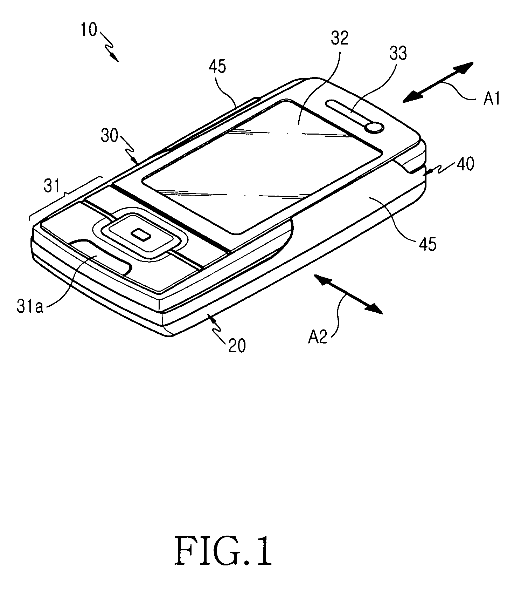

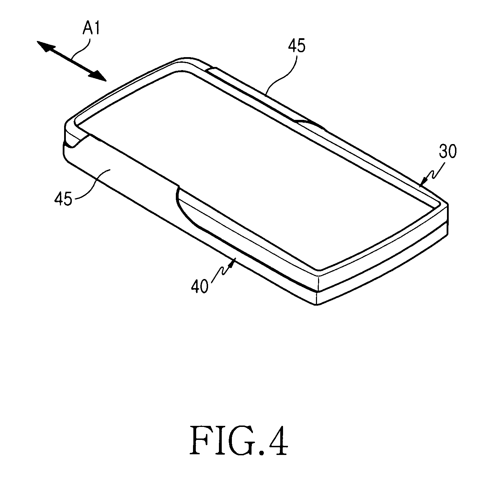

As shown in FIGs. 1 to 11, a double sliding-type portable communication apparatus 10 according to the present invention includes a main housing 20, a sliding housing 30, and a double sliding member 40.

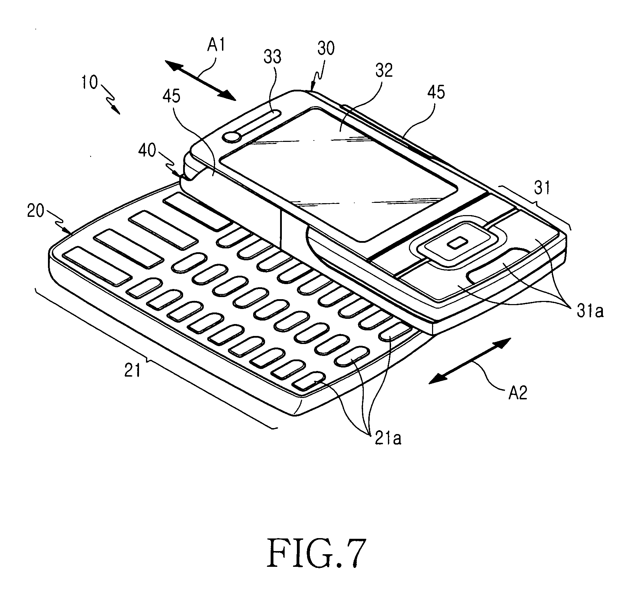

The main housing 20 has a first key array 21 including a plurality of keys 21a aligned on an upper surface of the main housing 20 and faces the sliding housing 30 (FIG. 7).

In this state, the sliding housing 30 slidably moves in a first sliding direction A1 and a second sliding direction A2, which is perpendicular to the first sliding direction A1.

In addition, a second key array 31 having a plurality of keys 31a and a liquid crystal display unit 32 are formed on an upper surface of the sliding housing 30 orienting them towards the user (FIG. 1).

The double sliding member 40 is provided between the main housing 20 and the sliding housing 30 to allow the sliding housing 30 to move in the first and second sliding directions A1 and A2.

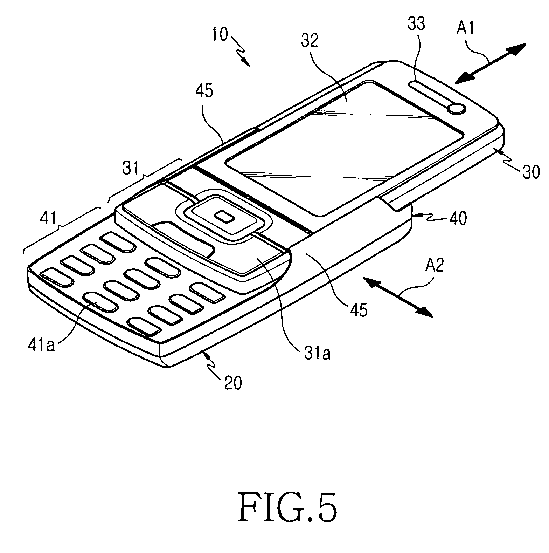

The double sliding member 40 has provided at an upper surface thereof a third key array 41 including a plurality of keys 41a (FIG. 5).

When the sliding housing 30 moves in the first sliding direction A1, the third key array 41 becomes exposed when moved in the first sliding direction, or covered by the sliding housing 30 when returned to the initial closed position. The third key array 41 is aligned with the second key array 31 in the first sliding direction A1.

In addition, when the sliding housing 30 moves in the second sliding direction A2, the first key array 21 also becomes exposed when moved in the second sliding direction, or covered by the sliding housing 30 when returned to the initial closed position. The first key array 21 is aligned with the second key array 31 in the second sliding direction A2.

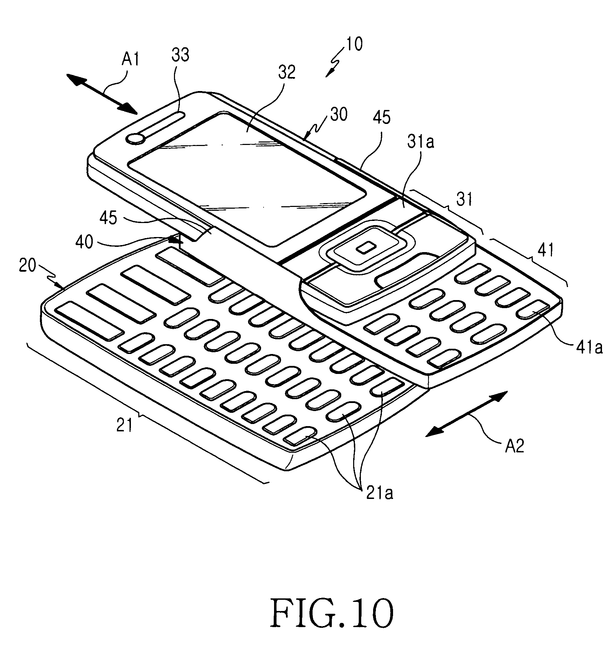

Meanwhile, when the sliding housing 30 is sequentially moved in the first and second sliding directions A1 and A2 from the main housing 20, all of the first to third key arrays 21, 31, and 41 are exposed to the user in substantially the same plane (FIG. 10).

In addition, the sliding housing 30 moves in the first sliding direction A1 parallel to the main housing 20 to allow the sliding housing 30 to become displaced from the main housing 20 and return into overlapping alignment with the main housing 20 when moved in the opposite direction.

In addition, the sliding housing 30 moves in the second sliding direction A2 from the main housing 20 to allow the sliding housing 30 to become laterally displaced from the main housing 20 in one direction, or return into overlapping alignment with the main housing 20 when moved in the other direction.

The sliding housing 30 moves slidably in the first and second sliding directions A1 and A2.

The number of keys 21 a of the first key array 21 is larger than the number of keys 31a of the second key array 31 or the number of keys 41a of the third key array 41.

The third key array 41 preferably has twelve keys 41a aligned in the form of a matrix including 3 columns x 4 rows.

The sliding housing 30 has provided at the upper surface thereofa first speaker unit 33 and a large-sized liquid crystal display unit 32 adjacent to the first speaker unit 33.

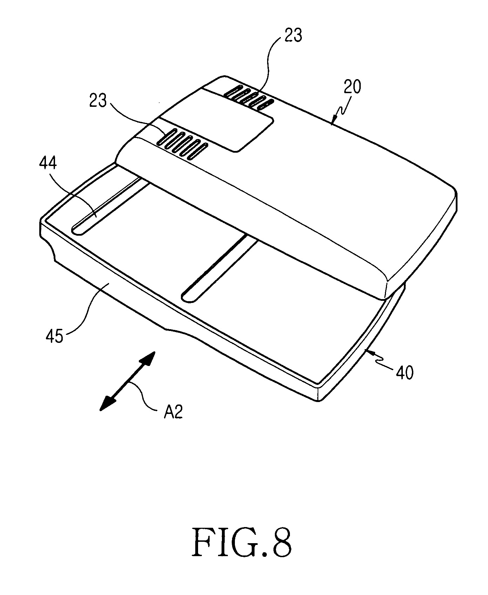

The main housing 20 has provided at a bottom surface thereof a second speaker unit 23 provided on its rear surface, such as a stereo speaker unit (FIG. 8).

In addition, a sliding housing guide plate 34 is coupled to a rear surface of the sliding housing 30 in order to guide the sliding movement of the sliding housing 30 in the first sliding direction A1.

The sliding housing guide plate 34 is formed at an inner portion thereof with a pair of first rail holes 35 into which guide protrusions 42 of the double sliding member 40 are inserted.

That is, the first rail holes 35 are formed in a vertical direction through the sliding housing 30 and coupled with the guide protrusions 42 of the double sliding member 40 to allow the sliding housing 30 to slidably move in the first sliding direction A1.

In addition, a double sliding member guide plate 43 is coupled to a rear surface of the double sliding member 40 so as to guide the sliding movement of the sliding housing 30 in the second sliding direction A2.

The double sliding member guide plate 43 is formed at an inner portion thereof with a pair of second rail holes 44 into which guide protrusions 22 of the main housing 20 are inserted.

That is, the second rail holes 44 are formed laterally with respect to the double sliding member 40 and are coupled with the guide protrusions 22 of the main housing 20 to allow the sliding housing 30 to slidably move in the second sliding direction A2.

In addition, the first and second rail holes 35 and 44 have predetermined lengths for limiting the movement of the sliding housing 30 with respect to the double sliding member 40 and the main housing 20, respectively.

A pair of guide holding sections 45 are provided at both sides of the double sliding member 40. The guide holding sections 45 are formed lengthwise along the double sliding member 40 to guide the sliding movement of the sliding housing 30 in the first sliding direction A1 and also supports the sliding housing 30.

The double sliding member 40 is formed at a predetermined portion thereof with a pair of coupling holes 46, into which the guide protrusions 22 of the main housing 20 are fixedly inserted.

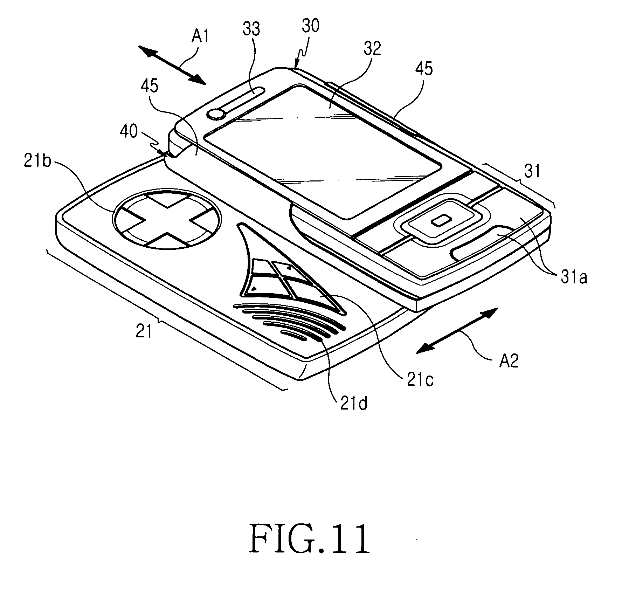

In addition, according to another embodiment of the present invention as shown in FIG. 11, the first key array 21 provided in the main housing 20 may include a four-way key 21b and a plurality of directional keys 21c adjacent to the four-way key 21b.

In addition, a third speaker unit 21d may be provided on an upper surface of the first key array 21.

Hereinafter, an operation of the double sliding-type portable communication apparatus 10 having the above construction according to the preferred embodiment of the present invention will be described in detail with reference to FIGS. 1 to 11.

As shown in FIG. 1, the double sliding-type portable communication apparatus 10 includes the main housing 20, the sliding housing 30, and the double sliding member 40.

The main housing 20 has provided at the upper surface thereof a f-irst key array 21 including a plurality of keys 21a which faces the sliding housing 30.

In addition, the second key array 31 having a plurality of keys 31a and the large-sized liquid crystal display unit 32 are formed on the upper surface of the sliding housing 30 orienting them towards the user.

In this state, the sliding housing 30 may slidably move from the main housing 20 in the first sliding direction A1 and the second sliding direction A2 which is perpendicular to the first sliding direction A1.

Herein, the sliding housing 30 moves in the first sliding direction A1 parallel along the main housing 20 to allow the sliding housing 30 to become displaced from the main housing 20 in one direction and return into overlapping alignment with the main housing 20 in the opposite direction.

In addition, the sliding housing 30 moves in the second sliding direction A2 from the main housing 20 to allow the sliding housing 30 to become laterally displaced from the main housing 20 in one direction or return into overlapping alignment with the main housing 20.

The double sliding member 40 is provided between the main housing 20 and the sliding housing 30 to allow the sliding housing 30 to move in the first and second sliding directions A1 and A2.

In addition, the third key array 41 including a plurality of keys 41a are provided on the upper surface of the double sliding member 40.

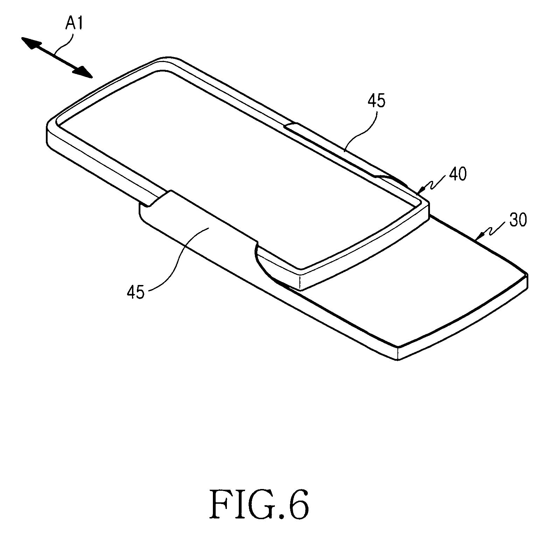

As shown in FIGS. 5 and 6, the sliding housing 30 moves in the first sliding direction A1 such that the sliding housing 30 becomes displaced from the main housing 30, while exposing the third key array 41 to the user.

At the same time, as shown in FIG. 5, the third key array 41 of the double sliding member 40 and the second key array 31 of the sliding housing 30 are exposed to the user while in aligned vertically with each other in the first sliding direction A1.

As shown in FIG. 6, the sliding housing 30 is guided by the guide holding sections 45 formed at both sides of the double sliding member 40 to allow the sliding housing 30 to be stably displaced away from the double sliding member 40 in the first sliding direction A1 within the guide holding sections 45.

That is, as shown in FIG. 7, the guide holding sections 45 guide the sliding movement of the sliding housing 30 in the first sliding direction A1 and also supports the sliding housing 30.

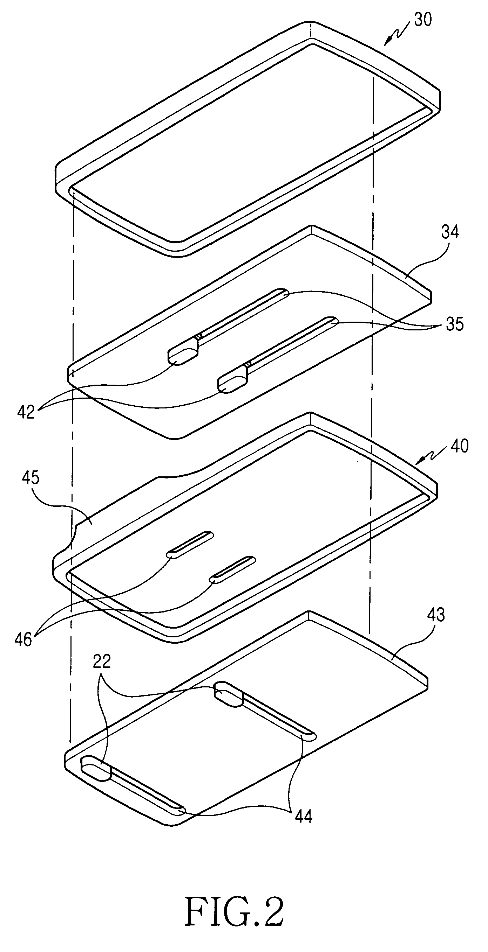

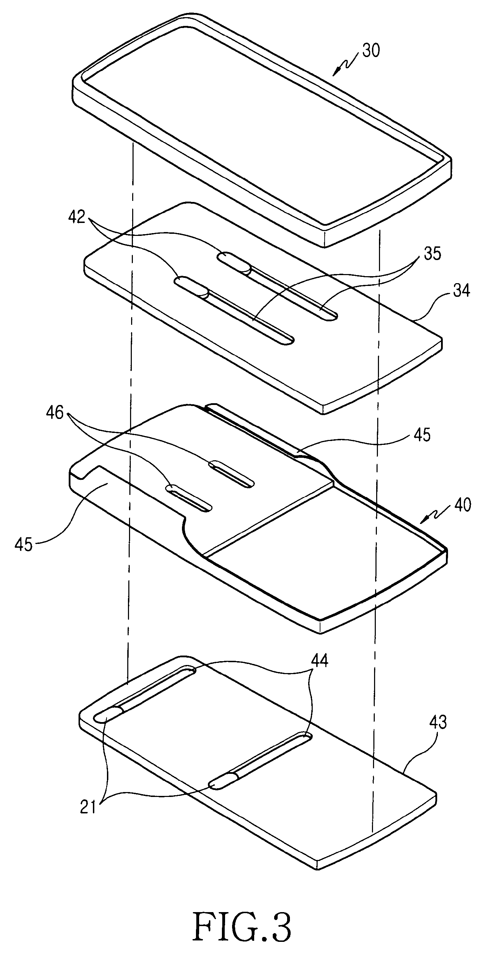

Meanwhile, as shown in FIGS. 2 and 3, the sliding housing guide plate 34 defines a pair of rail holes 35 which couples to the rear surface of the sliding housing 30.

The first rail holes 35 are formed in a vertical direction through the sliding housing 30 and are coupled with the guide protrusions 42 of the double sliding member 40 to allow the sliding housing 30 to slidably move in the first sliding direction A1.

In this state, if the sliding housing 30 moves in the first sliding direction A1, the sliding housing 30 is guided by the guide protrusions 42 along the first rail holes 35.

As shown in FIGS. 2 and 3, the first rail holes 35 have predetermined lengths for limiting the movement of the sliding housing 30 in the first sliding direction A1. When the sliding housing 30 moves in the first sliding direction A1, as shown in FIG. 5, the third key array 41 of the double sliding member 40 is exposed to the user.Herein, as shown in FIGS. 1 and 5, the sliding housing 30 can be returned to its initial position by slidably displacing the sliding housing 30 in the first sliding direction A1 to allow them to substantially overlap.

As shown in FIGS. 7 and 8, if a user wishes to use various functions of the portable terminal, such as games, the user slidably moves the sliding housing 30 in the second sliding direction A2 such that the sliding housing 30 becomes displaced from the main housing 20.

Herein, the sliding housing 30 moves in the second sliding direction A2, which is perpendicular to theorientation of the main housing 20.

Thus, as shown in FIG. 7, the first key array 21 of the main housing 20 is exposed to the user. At this time, the first key array 21 of the main housing 20 is aligned parallel to the second key array 31 in the second sliding direction A2.

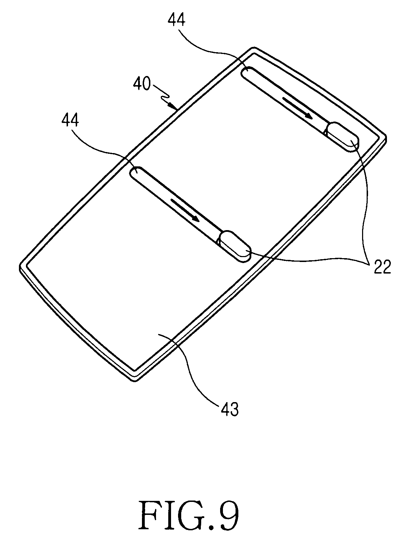

At this time, as shown in FIGS. 7 and 8, the sliding housing 30 may move in the second sliding direction A2 by means of the double sliding member 40 to allow the sliding housing 30 to become displaced from the main housing 20.
As shown in FIG. 9, the double sliding member guide plate 43 having a pair of second rail holes 44 is coupled to the rear surface of the double sliding member 40.As shown in FIG. 8, the second rail holes 44 are formed in a tranverse direction through the double sliding member 40.

As shown in FIGS. 7 to 9, guide protrusions 22 of the main housing 20 are inserted into the second rail holes 44 to guide the sliding housing 30 in the second sliding direction A2, within the second rail holes 44.
As shown in FIGS. 8 and 9, the second rail holes 44 have predetermined lengths for limiting the movement of the sliding housing 30 in the second sliding direction A2 with respect to the main housing 20.Herein, as shown in FIG. 7, the sliding housing 30 can be returned to its initial position by slidably displacing the sliding housing 30 in the second sliding direction A2 substantially overlapping the sliding housing 30 over the main housing 20.

In addition, as shown in FIG. 10, when the sliding housing 30 is sequentially moved in the first and second sliding directions A1 and A2 from the main housing 20, all of the first to third key arrays 21, 31, and 41 can be exposed to the user in substantially the same plane.

That is, as shown in FIG. 10, the first to third key arrays 21, 31, and 41 can be exposed to the user by sequentially displacing the sliding housing 30 in the first and second sliding directions A1 and A2.
As mentioned above, the number of keys 21a of the first key array 21 is greater than the number of keys 31a of the second key array 31 or the number of keys 41a of the third key array 41, employing many more keys in the portable terminal that the user mayt use for a wide variety of functions and games.This configuration allows convenient operation of the keys 21a, 31a and 41a of the first to third key arrays 21, 31 and 41 with both hands.

In addition, as shown in FIGS. 1 and 10, the sliding housing 30 has provided at the upper surface thereof a first speaker unit 33 and a large-sized liquid crystal display unit 32 aligned adjacent to the first speaker unit 33.

As shown in FIG. 8, the main housing 20 has provided at the bottom surface thereof a second speaker unit 23, such as a stereo speaker unit.

In addition, according to another embodiment of the present invention as shown in FIG. 11, the first key array 21 provided in the main housing 20 may include a four-way key 21b and a plurality of directional keys 21c adjacent to the four-way key 21b. As shown in FIG. 11, the third speaker unit 21d is provided at an upper surface of the first key array 21.

As described above, the sliding housing of the portable terminal can be displaced relative to the main housing in the first and second sliding directions aligning the sliding housing parallel to the mainhousing, resulting in a slim portable terminal having a relatively large usable area. Accordingly, a plurality of keys and a large-sized liquid crystal display unit can be provided in the portable terminal, so the user can conveniently operate the keys with both hands when sending characters or playing games. As such, the present invention may be adaptable for various portable terminals.

While the invention has been shown and described with reference to certain preferred embodiments thereof, it will be understood by those skilled in the art that various changes in form and detail may be made therein without departing from the scope of the invention as defined by the appended claims.

## Claims

1. A double sliding-type portable communication apparatus comprising:
a main housing defining a longitudinal axis and having a first key array including a plurality of keys aligned on an upper surface of the main housing;
a sliding housing movable in a first sliding direction along the longitudinal axis, and a second sliding direction, which is perpendicular to the first sliding direction, while facing the main housing and has a display unit and a second key array including a plurality of keys aligned on the upper surface; and
a double sliding member provided between the main housing and the sliding housing allowing the sliding housing to be displaced in the first and second sliding directions and having a third key array including a plurality of keys aligned on an upper surface of the double sliding member and in vertical alignment with the second key array when the sliding housing moves from the main housing in the first sliding direction, wherein the first key array is exposed on the upper surface of the main housing while aligned in parallel to the second key array when the sliding housing displaces away from the main housing in the second direction, and the first to third key arrays are displaced in substantially the same plane when the sliding housing moves from the main housing in the first and second sliding directions.

2. The double sliding-type portable communication apparatus as claimed in claim 1, wherein the sliding housing is movable in the first sliding direction away from the main housing and towards the main housing along the longitudinal axis.

3. The double sliding-type portable communication apparatus as claimed in claim 1, wherein the sliding housing is movable in the second sliding direction perpendicular to the first sliding direction away from and towards the main housing.

4. The double sliding-type portable communication apparatus as claimed in claim 1, wherein the sliding housing is movable linearly in the first and second sliding directions.

5. The double sliding-type portable communication apparatus as claimed in one of claims 1 to 4, wherein a sliding movement of the sliding housing in the first and second sliding directions is sequentially performed.

6. The double sliding-type portable communication apparatus as claimed in one of claims 1 to 4, wherein a sliding movement of the sliding housing in the first and second sliding directions is simultaneously performed.

7. The double sliding-type portable communication apparatus as claimed in one of claims 1 to 6, wherein a number of keys of the first key array is greater than a number of keys of the second and third key arrays.

8. The double sliding-type portable communication apparatus as claimed in one of claims 1 to 6, wherein the third key array has twelve keys aligned in a matrix having 3 columns x 4 rows.

9. The double sliding-type portable communication apparatus as claimed in one of claims 1 to 8, wherein the sliding housing has provided at an upper surface thereof a first speaker unit and a large-sized liquid crystal display unit positioned adjacent to the first speaker unit.

10. The double sliding-type portable communication apparatus as claimed in one of claims 1 to 8, wherein the main housing has provided on a bottom surface thereof a speaker unit including a stereo speaker unit.

11. The double sliding-type portable communication apparatus as claimed in one of claims 1 to 10, wherein a sliding housing guide plate having a pair of first rail holes is coupled to a rear surface of the sliding housing, the pair of first rail holes being formed along the longitudinal axis of the sliding housing, and guide protrusions of the double sliding member protrude into the first rail holes guiding the sliding movement of the sliding housing in the first sliding direction.

12. The double sliding-type portable communication apparatus as claimed in claim 11, wherein a double sliding member guide plate having a pair of second rail holes is coupled to a rear surface of the double sliding member, the second rail holes are formed perpendicular to the longitudinal axis along the double sliding member, and guide protrusions of the main housing protrude into the second rail holes guiding the sliding movement of the sliding housing in the second sliding direction.

13. The double sliding-type portable communication apparatus as claimed in claim 12, wherein the first and second rail holes have respective predetermined lengths for limiting the sliding movements of the sliding housing.

14. The double sliding-type portable communication apparatus as claimed in one of claims 1 to 10, wherein a pair of guide holding sections are provided at the sides of the double sliding member, the guide holding sections are formed vertically along the double sliding member so as to guide a sliding movement of the sliding housing in the first and second sliding directions and to hold the sliding housing, and a pair of coupling holes are formed at a predetermined portion of the double sliding member in order to fixedly receive guide protrusions from the main housing.

15. The double sliding-type portable communication apparatus as claimed in one of claims 1 to 7, wherein the first key array includes a four-way key, a plurality of directional keys, and a speaker unit positioned adjacent to the four-way keys and the directional keys.

16. A double sliding-type portable communication apparatus comprising:
a main housing having a first key array including a plurality of keys aligned on an upper surface of the main housing; and
a sliding housing movable in a first sliding direction and a second sliding direction, which is perpendicular to the first sliding direction, with respect to the main housing, wherein the sliding housing is aligned in parallel to the main housing when the sliding housing is displaced away from the main housing in the first and second sliding directions, thereby exposing a plurality of keys provided on the upper surface of the main housing and the sliding housing.

17. The double sliding-type portable communication apparatus as claimed in claim 16, further comprising a double sliding member provided between the main housing and the sliding housing and having a third key array including a plurality of keys aligned on an upper surface of the double sliding member, wherein the double sliding member guides a sliding movement of the sliding housing in the first and second sliding directions and supports the sliding housing.

18. The double sliding-type portable communication apparatus as claimed in claim 16 or 17, wherein the main housing has provided at the upper surface thereof a first key array including a plurality of keys, and the sliding housing has provided at an upper surface thereof with a second key array including a plurality of keys which remain exposed.

19. The double sliding-type portable communication apparatus as claimed in claim 17, wherein the first key array is aligned parallel to the second key array in the second sliding direction when the sliding housing is displaced away from the main housing in the second sliding direction, the third key array is aligned with the second key array in the first sliding direction when the sliding housing is displaced from the main housing in the first sliding direction, and the first, second, and third key arrays are exposed substantially in parallel to one another when the sliding housing is displaced away from the main housing in the first and second sliding directions.
